# EUROPEAN PATENT SPECIFICATION

(11) **EP 2 044 259 B1**
(45) Date of publication and mention of the grant of the patent: **12.02.2014**
(21) Application number: 06823877.3
(22) Date of filing: 04.12.2006
(51) Int. Cl.: D06M 10/00, B29C 59/16, H05B 6/80

(54) **MODIFICATION OF CARBON FIBERS BY MEANS OF ELECTROMAGNETIC WAVE IRRADIATION**
MODIFIZIERUNG VON CARBONFASERN MITTELS ELEKTROMAGNETISCHER BESTRAHLUNG
MODIFICATION DE FIBRES DE CARBONE PAR IRRADIATION D'ONDES ÉLECTROMAGNÉTIQUES

(30) Priority: 21.07.2006 KR 20060068557
(43) Date of publication of application: 08.04.2009
(73) Proprietor: Postech Academy-Industry Foundation, Pohang, Gyungbuk 790-784 (KR); Postech Foundation, Pohang, Gyungbuk 790-784 (KR)
(72) Inventor: LEE, Yoo Jin, Pohang, Gyungbuk 790-784 (KR); LEE, Kun Hong, Pohang, Gyungbuk 790-784 (KR)
(74) Representative: Acco, Stefania
(86) International application number: PCT/KR2006/005169
(87) International publication number: WO 2008/010630

(56) References cited:
- KR-A- 20030 018 975
- US-A1- 2003 000 827
- US-B1- 6 372 192
- US-B1- 6 514 449

## Description

### Technical Field

The present invention relates to a surface treatment method of modifying the surface of carbon fibers by irradiating an electromagnetic wave to the carbon fibers.

### Background Art

Carbon fibers have been widely used as filling materials for improving the property of an adsorbent or a polymer material owing to the characteristics of its own high strength and conductivity, etc. There have been proposed the methods of modifying the surface of various carbon fibers since a bonding force between a polymer matrix and carbon fibers is increased to further improve the physical property of composite materials, adsorption property or the like, when surface modification of such carbon fibers is performed.

Patent US 6,372,192 describes a method or producing carbon and/or graphite fibers wherein stabilized carbon fiber precursors are placed in an oxygen-free atmosphere, under slight tension and/or physically restrained, and subjected to both a plasma energy and a level of electromagnetic radiation which is increased as the fibers progress towards a final carbon or graphite product.

Patent US 6,514,449 discloses a method is disclosed for producing an undulated surface on reinforcement fibers using a non-uniform microwave generated plasma and microwave radiation. Reinforcement fibers are introduced into an oxygen-free atmosphere under pressure, the fibers being under slight tension and at least partially stabilized, and then subjected to a microwave generated plasma flux and microwave radiation, the plasma flux and microwave radiation being varied over either space or time to produce the undulated surface.

Currently, as the surface treatment method of the carbon fibers an oxidation method of carbon fibers is mainly used. The oxidation method is roughly divided into gas-phase oxidation and liquid-phase oxidation.

The gas-phase oxidation mostly employs plasma. At this time, an example of gas being used includes air, oxygen, ozone, carbon dioxide, sulfur dioxide, etc., (*see Literature["*Aromic-scale scaning tunneling microscopy study of plasma-oxidized ultrahigh-modulus carbon fiber surfaces", Journal of Coloid and Interface science, volume 258, pp.276-282 (2003*)]).*

However, since the oxidation method employing such plasma requires that the inner pressure of a reactor should be maintained low, complicated vacuum equipment is needed.

The material used in the liquid-phase oxidation includes nitric acid (HNO₃), Sodium Hypochlorite (NaClO), hypochlorous acid (HClO), Potassium Permanganate(KMnO₄), etc., (*see Literature ["*Nitric acid oxidation of carbon fibers and the effects of subsequent treatment in refluxing aqueous NaOH", Carbon, volume 33, pp. 597-605 (1995*)*]). This method is a method of improving adhesion between the carbon fibers and the polymer, but requires a relatively long time of the unit of several minutes and a complex process.

Therefore, there is a continuous need for a method of modifying the surface of carbon fibers within a short time even without using such a special condition of vacuum, high temperature or the like, or special chemical substance.

### Disclosure of Invention

### Technical Problem

Accordingly, an objectof the present invention is to provide a method of modifying the surface of carbon fibers.

### Technical Solution

To accomplish the above object, a method of modifying the surface of carbon fibers according to the present invention is characterized in that carbon fibers are modified by irradiating an electromagnetic wave thereto.

In the present invention, the carbon fibers are modified by the change of the physical and/or chemical property by means of an electromagnetic wave irradiated to the carbon fibers. In the embodiment of the present invention, the surface property of the carbon fibers not is changed, and the surface roughness of the carbon fibers is changed.

In the present invention, the carbon fibers modified by means of the elect romagnetic wave can employ typical carbon fibers. Examples of the carbon fibers include PAN-based, Rayon-based, Pitch-based or chemical vapor deposition (CVD)-based carbon fibers, and/or for example sized carbon fibers which are obtained by surface-treatment thereof.

In the present invention, the carbon fibers are products in which carbon fibers are sized with epoxy, and have used Pyrofil^{™} TRH50 manufactured by Mitsubishi Rayon, Co. Ltd., (Density: 1.80g/ cm², Filament diameter: 7□, High strength/Modulus: 4900MPa/255GPa).

In the present invention, it is preferable use an electromagnetic wave of a high frequency having energy capable of inducing a change in the surface of the carbon fibers so as to modify the carbon fibers. In a preferred embodiment of the present invention, the electromagnetic wave can employ an electromagnetic wave of MHz to GHz unit. In a more preferred embodiment of the present invention, it is advantageous to use an electromagnetic wave whose frequency ranges from 1.0 MHz to 10.0 GHz in terms of the time spent for surface modification of the carbon fibers by means of an electromagnetic wave or from the point of view of economy. In a preferred embodiment of the present invention, the electromagnetic wave can be irradiated from a known electromagnetic wave irradiating device such as a magnetron.

In the present invention, the modification of the carbon fibers by means of the electromagnetic wave can be performed in various gaseous environments depending on a predetermined modification direction. For example, the modification of the carbon fibers is possible under existence of air, oxygen, ozone, steam, ammonia, carbon oxide, nitride oxide gas, sulfur oxide gas, hydrogen sulfide and a mixture thereof.

In one embodiment of the present invention, the surface modification of the carbon fibers by means of the electromagnetic wave, can be progressed under the atmosphere of an inert gas, for example an argon gas so as to prevent any reaction with ambient gas during the modification.

Although being theoretically limited, the surface carbons of the carbon fibers is recrystallized by means of an electromagnetic wave irradiated to the carbon fibers to increase the roughness of the surface of the carbon fibers. Such an increase in surface roughness results in improvement of a bonding force between carbon fibers and the matrix base material on which carbon fibers are dispersed. By the modification of the carbon fibers using such an electromagnetic wave, the surface roughness of the carbon fibers can typically increase approximately 10 to 1000 times.

In one aspect of the present invention, a system for modifying carbon fibers is characterized by comprising a modification reactor for the carbon fibers and an electromagnetic wave irradiating device for irradiating an electromagnetic wave into the modification reactor.

In the present invention, the electromagnetic wave irradiating device can be installed inside or outside the reactor so as to modify carbon fibers introduced into the reactor. As long as the electromagnetic wave irradiating device can irradiate an electromagnetic wave having energy capable of inducing the modification of the carbon fibers, there is no special limitation to an irradiation method. In one embodiment of the present invention, the electromagnetic wave irradiating device is a magnetron which can continuously irradiate an electromagnetic wave of GHz unit. The magnetron can adjust irradiation power and irradiation time in the unit of several seconds to several tens of seconds depending on the purpose or the degree of modification.

In the present invention, the carbon fibers within the reactor, which receives the electromagnetic wave irradiated from the electromagnetic wave irradiating device, can be surface-modified by means of energy of the irradiated electromagnetic wave. In one embodiment of present invention, the modification of the carbon fibers may be, for example, a change in surface roughness of the carbon fibers, i.e., an increase in surface roughness of the carbon fibers. The increase in surface roughness of the carbon fibers enables improvement of the performance of the product including carbon fibers, for example, the physical property of the carbon fibers by increasing a bonding force between carbon fibers and the matrix base material on which carbon fibers are dispersed.

A system for modifying the surface of carbon fibers comprises:
a magnetron for oscillating an electromagnetic wave;
a power supply for supplying power to the magnetron;
an isolator for transferring the electromagnetic wave to only one side of a transmission path;
a directional coupler for monitoring the size of an incident wave and a reflection wave;
a three-stub tuner for performing impedance-matching for the electromagnetic wave incident thereto from the directional coupler;
a reactor for allowing the carbon fibers to be modified therein by the electromagnetic wave transferred thereto from the three-stub tuber; and
a gas supply unit for supplying gas to the reactor.

In one embodiment used in the present invention, the magnetron may be a device for modifying the surface of the carbon fibers, and increasing the surface roughness of the carbon fibers. In a preferred embodiment used in the present invention, the magnetron may be a magnetron for irradiating an electromagnetic wave of 2.45 GHz with a power of several thousands of watts (W). The magnetron is commercially available.

In the present invention, the gas supply unit can supply a filled gas by the kinds depending on the direction of modification. In case of the surface modification, the gas supply unit may be a gas supply unit for supplying an inert gas such as an argon gas.

In the present invention, the carbon fiber whose surface is modified is a typical carbon fiber which is commercially available, and there is no special limitation to the manufacture method or the kind thereof. In the present invention, the carbon fibers may be carbon fibers used to improve the physical property of a matrix on which the carbon fibers are dispersed through improvement of surface roughness, for example carbon fibers used to manufacture composite materials for polymers. In a preferred embodiment of the present invention, the carbon fibers may be carbon fibers which are sized with polymer such as epoxy.

In one aspect of the present invention, the carbon fibers whose surface roughness increases by means of the electromagnetic wave is provided as carbon fibers for composite materials.

According to the present invention, the carbon fibers whose surface is modified exhibit an increase in roughness more than 10 times, and preferably a roughness of approximately 10 to 1000 times as compared to carbon fibers prior to surface modification. In one embodiment of the present invention, the surface roughness of the carbon fibers can be measured by an atomic force microscopy (AFM). The carbon fiber whose surface is modified by means of the electromagnetic wave of the present invention has a surface roughness ranging from 10nm to 5 m, and the surface roughness of the carbon fiber prior to reaction has a surface roughness ranging from 3nm to 10nm.

In one aspect of the present invention, there is provided a use of a magnetron for increasing the surface roughness of the carbon fibers. The magnetron used in the present invention for oscillating the electromagnetic wave is supplied with power from the power supply, and the electromagnetic wave oscillated from the magnetron passes through the isolator so as to be transmitted to the directional coupler. The isolator absorbs a reflection wave reflected to the magnetron to prevent the magnetron from being damaged as well as transfer the electromagnetic wave oscillated from the magnetron to the directional coupler. The directional coupler monitors the size of an incident wave and a reflection wave. The three-stub tuner performs impedance-matching for the electromagnetic wave incident thereto from the directional coupler to thereby maximize the transmission of the electromagnetic wave energy.

The electromagnetic wave energy irradiated by the magnetron reaches the carbon fibers to modify the carbon fibers so as to increase the surface roughness of the carbon fibers up to more than 10 times, so that compatibility between the manufactured carbon fibers and the dispersed matrix can increase.

The embodiment of the present invention will be described hereinafter in detail with reference to the drawings. The embodiment described below is intended to merely exemplify the present invention, but should not be construed as limiting the scope of the present invention.

### Advantageous Effects

According to the present invention, a novel method is provided which can modify the surface of carbon fibers by means of an electromagnetic wave. The modification method of the carbon fibers using the electromagnetic wave provides carbon fibers whose roughness is improved in surface modification. In case where the carbon fibers whose roughness is improved is used together with a matrix, an excellent mechanical property is provided to the carbon fibers containing matrix.

Also, according to the present invention, a concrete system capable of modifying the carbon fibers using the electromagnetic wave is provided. Both the carbon fibers with a high surface roughness and a new use of the magnetron as a device for modifying the surface of the carbon fibers are provided.

### Brief Description of the Drawings

The above and other objects, features and advantages of the present invention will be apparent from the following detailed description of the preferred embodiments of the invention in conjunction with the accompanying drawings, in which:
FIG. 1 is a schematic view illustrating a carbon fiber surface modifying device used in the present invention.
FIGs. 2 and 3 are photographs captured by a scanning electron microscopy (SEM) in which carbon fibers are magnified 3,000 times and 50,000 times, respectively, prior to irradiation of the electromagnetic wave to the carbon fibers.
FIGs. 4 and 5 are photographs captured by a scanning electron microscopy (SEM) in which the surface of carbon fibers is magnified 10,000 times and 50,000 times, respectively, after irradiation of the electromagnetic wave to the carbon fibers.
FIG. 6 is a schematic block diagram illustrating a carbon fiber surface modifying device according to the present invention of FIG. 1.

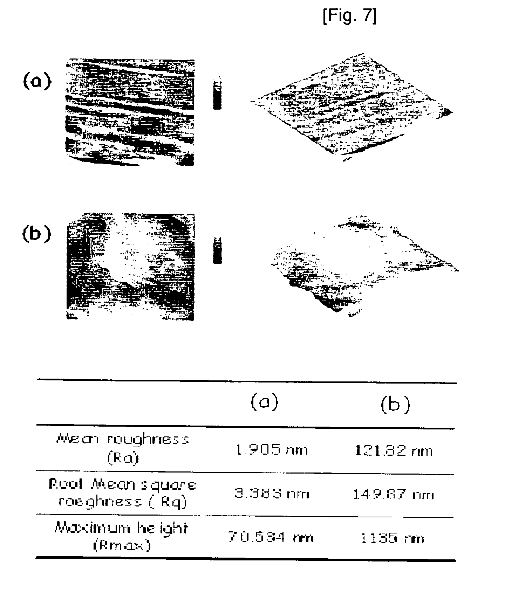

FIGs. 7(a) and 7(b) are the AFM analysis results showing the roughness of the carbon fibers prior to and after irradiation of the electromagnetic wave to the carbon fibers according to a first embodiment of the present invention.

### Best Mode for Carrying Out the Invention

### Embodiment

Reference will now be made in detail to the preferred embodiment of the present invention with reference to the attached drawings.

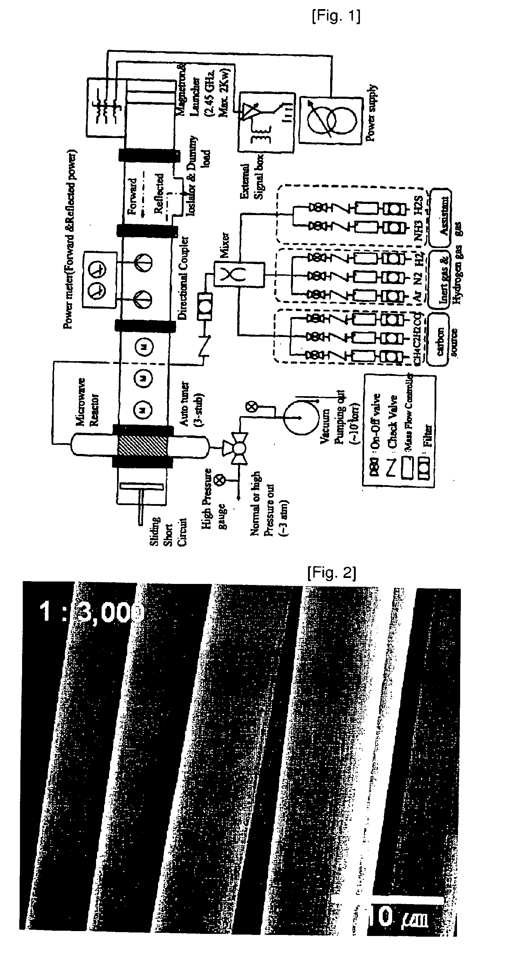

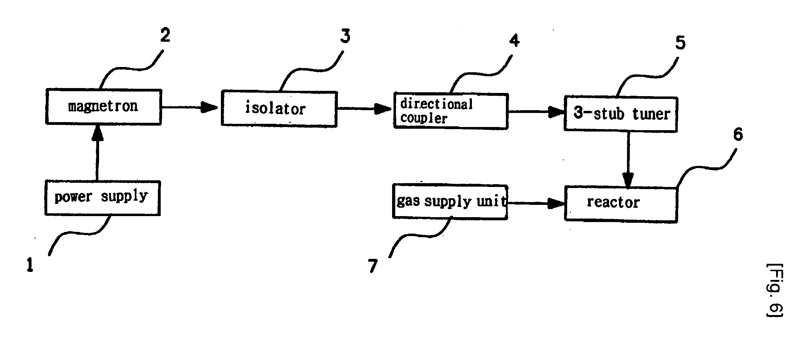

As shown in FIGs. 1 to 6, the carbon fiber surface modifying device used in the present invention comprises a magnetron 2 (2.45 GHz, 2,000 W) for oscillating an electromagnetic wave, a power supply 1 for supplying power to the magnetron, an isolator 3 for preventing the magnetron from being damaged by a reflection wave, a directional coupler 4 for monitoring the electromagnetic wave transmitted thereto from the isolator, a three-stub tuner 5 for performing impedance-matching for the electromagnetic wave incident thereto from the directional coupler, a reactor 6 for allowing the carbon fibers to be modified therein by the electromagnetic wave transferred thereto from the three-stub tuber and a gas supply unit 7 for supplying gas to the reactor.

In order to modify the surface of the carbon fibers, when the magnetron 2 for oscillating the electromagnetic wave is supplied with power from the power supply 1, the electromagnetic wave oscillated from the magnetron 2 passes through the isolator 3 so as to be transmitted to the directional coupler 4. The isolator 3 completely absorbs a reflection wave reflected to the magnetron 2 to protect the magnetron from a reflection wave as well as transfer the electromagnetic wave oscillated from the magnetron to the directional coupler 4. The directional coupler 4 monitors the size of an incident wave and a reflection wave and outputs the electromagnetic wave transmitted thereto from the isolator 3. The three-stub tuner 5 performs impedance-matching for the electromagnetic wave incident thereto from the directional coupler to thereby maximize the transmission of the electromagnetic wave energy.

After the carbon fibers (Pyrofil^{™} TRH50 manufactured by Mitsubishi Rayon, Co. Ltd.,) sized with epoxy has been introduced into the reactor 6, gas was caused to sufficiently flow in the inner space of the reactor and then the argon gas supplied from an 100 sccm-level gas supply unit 7 was caused to pass through the inside of the reactor 6 while being changed to 400 sccm and 10 minutes cm. At this time, the magnetron 2 was operated with a power of 1,000 W and then modification treatment of the carbon fibers was conducted for 30 seconds.

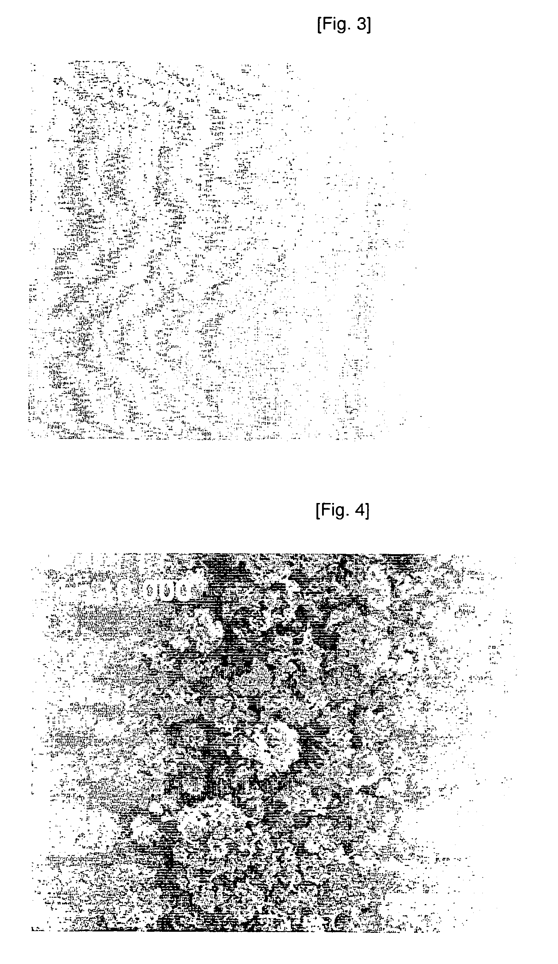

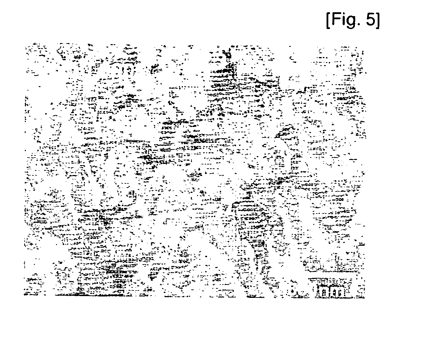

After the modification treatment of the carbon fibers, the photographs captured by the scanning electron microscopy (SEM) were shown in FIGs. 4 and 5. It could be found that the photographs shown in FIGs. 4 and 5 exhibit a greater change in surface roughness of the carbon fibers as compared to SEM photographs shown in FIGs. 2 and 3 for original carbon fibers prior to irradiation of the electromagnetic wave to the carbon fibers.

### Industrial Applicability

While the present invention has been described in connection with what is presently considered to be practical exemplary embodiments, it is to be understood that the invention is not limited to the disclosed embodiments, but, those skilled in the art can change or modify the embodiments within the spirit and scope of the appended claims. Accordingly, the scope claimed in the present invention is not defined within the scope of the detailed description but will be defined by the appended claims and their technical spirit.

## Claims

1. A method of modifying the surface of carbon fibers by irradiating an electromagnetic wave to the carbon fibers, thereby increasing the surface roughness of the carbon fibers measured by an atomic force microscopy.

2. The method according to claim 1, wherein the frequency of the electromagnetic wave ranges from 1.0 MHz to 100.0 GHz.

3. The method according to claim 1, wherein the modification of the carbon fibers is performed in an inert gas atmosphere.

4. The method according to claim 3, wherein the inert gas is an argon gas.

5. The method according to claim 1, wherein the surface roughness of the carbon fibers increases approximately 10 to 1000 times.

6. The method according to claim 1, wherein the carbon fibers are sized carbon fibers.

7. The method according to claim 1, wherein the modification of the carbon fibers is performed under a gas selected from the group consisting of air, oxygen, ozone, steam, ammonia, carbon oxide, nitride oxide gas, sulfur oxide gas, hydrogen sulfide and a mixture thereof.

8. The method according to claim 2, wherein the electromagnetic wave is irradiated from a magnetron.

## Patentansprüche

1. Verfahren zum Modifizieren der Oberfläche von Carbonfasern durch Bestrahlen der Carbonfasern mit einer elektromagnetischen Welle, wodurch die mittels Atomkraftmikroskopie gemessene Oberflächenrauheit der Carbonfasern erhöht wird.

2. Verfahren nach Anspruch 1, wobei die Frequenz der elektromagnetischen Welle von 1,0 MHz bis 100,0 GHz reicht.

3. Verfahren nach Anspruch 1, wobei die Modifizierung der Carbonfasern in einer Schutzgasatmosphäre durchgeführt wird.

4. Verfahren nach Anspruch 3, wobei das Schutzgas ein Argongas ist.

5. Verfahren nach Anspruch 1, wobei die Oberflächenrauheit der Carbonfasern sich ungefähr 10- bis 1000-fach erhöht.

6. Verfahren nach Anspruch 1, wobei die Carbonfasern geschlichtete Carbonfasern sind.

7. Verfahren nach Anspruch 1, wobei die Modifizierung der Carbonfasern unter einem Gas durchgeführt wird, das aus der aus Luft, Sauerstoff, Ozon, Dampf, Ammoniak, Kohlenstoffoxid, Nitridoxidgas, Schwefeloxidgas, Schwefelwasserstoff und einer Mischung davon bestehenden Gruppe ausgewählt ist.

8. Verfahren nach Anspruch 2, wobei die elektromagnetische Welle von einem Magnetron ausgestrahlt wird.

## Revendications

1. Procédé de modification de la surface de fibres de carbone en exposant lesdites fibres de carbone à la radiation d'une onde électromagnétique, la rugosité de surface des fibres de carbone mesurée par une microscopie à force atomique étant ainsi augmentée.

2. Procédé selon la revendication 1, dans lequel la fréquence de ladite onde électromagnétique est comprise entre 1,0 MHz et 100,0 GHz.

3. Procédé selon la revendication 1, dans lequel la modification des fibres de carbone est mise en oeuvre dans une atmosphère de gaz inerte.

4. Procédé selon la revendication 3, dans lequel ledit gaz inerte est un gaz d'argon.

5. Procédé selon la revendication 1, dans lequel la rugosité de surface des fibres de carbone augmente approximativement de 10 à 1000 fois.

6. Procédé selon la revendication 1, dans lequel les fibres de carbone sont des fibres de carbone ensimées.

7. Procédé selon la revendication 1, dans lequel la modification des fibres de carbone est réalisée sous un gaz qui est choisi dans le groupe comprenant l'air, l'oxygène, l'ozone, la vapeur, l'ammoniac, l'oxyde de carbone, le gaz d'oxyde de nitrure, le gaz d'oxyde de soufre, le sulfure d'hydrogène et un mélange de ceux-ci.

8. Procédé selon la revendication 2, dans lequel ladite onde électromagnétique est émise par un magnétron.
